(19) Europäisches Patentamt
European Patent Office
Office européen des brevets

(11) **EP 0 934 948 B1**

(12) **EUROPÄISCHE PATENTSCHRIFT**

(45) Veröffentlichungstag und Bekanntmachung des Hinweises auf die Patenterteilung:
**06.11.2002 Patentblatt 2002/45**

(51) Int Cl.7: **C07F 9/38**, C23F 11/167, C02F 5/14, C08K 5/5333

(21) Anmeldenummer: **99101117.2**

(22) Anmeldetag: **21.01.1999**

(54) **Phosphorhaltige Verbindungen auf Basis der 1-Hydroxypropan-1,3-diphosphonsäure**

Phosphorus containing compounds based on 1-hydroxy-1,3-diphosphonic acid

Composés contenant du phosphore à base d'acide 1-hydroxy-1,3-diphosphonique

(84) Benannte Vertragsstaaten:
**DE ES FR GB IT SE**

(30) Priorität: **03.02.1998 DE 19804124**

(43) Veröffentlichungstag der Anmeldung:
**11.08.1999 Patentblatt 1999/32**

(73) Patentinhaber: **Bayer Aktiengesellschaft**
**51368 Leverkusen (DE)**

(72) Erfinder:
- **Holzner, Christoph Dr.**
  **51061 Köln (DE)**
- **Spaniol, Armin Dr.**
  **51465 Bergisch-Gladbach (DE)**
- **Dahmen, Hans**
  **51061 Köln (DE)**

(56) Entgegenhaltungen:
**EP-A- 0 074 336** **EP-A- 0 141 200**
**US-A- 3 532 639**

- **CHEMICAL ABSTRACTS, vol. 083, no. 10, 8. September 1975 Columbus, Ohio, US; abstract no. 081146, SATO K ET AL: "Fireproofing of textiles" XP002101283 & JP 49 020099 - (KANEBO, LTD.;JAPAN)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 934 948 B1

**Beschreibung**

Die vorliegende Erfindung betrifft phosphorhaltige Verbindungen auf Basis der 1-Hydroxypropan-1,3-diphosphonsäure sowie die Säure selber, ein Verfahren zu ihrer Herstellung, neue Zwischenprodukte sowie ihre Verwendung als Korrosionsinhibitor, Steininhibitor und als Flammschutzmittel. 1-Hydroxyphosphonsäuren mit dem Strukturelement

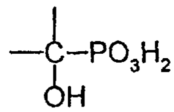

finden in der Wasserbehandlung vielfältige Verwendung. So wird 1-Hydroxyethan-1,1-diphosphonsäure (HEDP) zur Inhibierung von Kesselsteinbildung in Kühlwässern angewandt (P. R. Puckorius, S. D. Strauss; Power, May 1995, Seite 17 f.). Hydroxyphosphonoessigsäure ist bekannt als Korrosionsinhibitor für Metalle (siehe EP 0 074 336). Nachteilig an den beiden Verbindungen ist, daß sie jeweils nur in einer Disziplin gute Wirksamkeit zeigen: HEDP ist ein guter Kesselsteininhibitor, aber ein schlechterer Korrosionsinhibitor; Hydroxyphosphonoessigsäure zeigt dagegen guten Korrosionsschutz, aber nur geringen Schutz gegenüber Kalkablagerungen.

Aufgabe der vorliegenden Erfindung war es, neue phosphorhaltige Verbindungen auf Basis einer 1-Hydroxyphosphonsäure zu finden, die sowohl gute Korrosions- als auch Steininhibierung aufweisen sowie ein möglichst einfaches Verfahren zu ihrer Herstellung zur Verfügung zu stellen.

Diese Aufgabe konnte überraschenderweise durch phosphorhaltige Verbindungen auf Basis der 1-Hydroxypropan-1,3-diphosphonsäure gelöst werden.

Gegenstand der Erfindung sind Verbindungen der Formel (I)

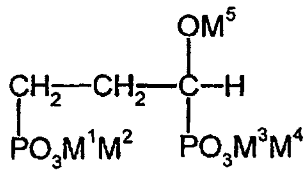

(I),

in welcher

$M^1$, $M^2$, $M^3$, $M^4$ und $M^5$ unabhängig voneinander jeweils für einen Rest der Reihe Wasserstoff, Alkalimetall, ein Äquivalent eines Erdalkalimetalls, Ammonium, alkyl- oder hydroxyalkylsubstituiertes Ammoniumsalze stehen.

In den Salzen können die fünf sauren Protonen der l-Hydroxypropan-1,3-diphosphonsäure ganz oder teilweise durch Kationen ersetzt sein. Bevorzugte Verbindungen der Formel (I) sind Verbindungen in denen $M^1$, $M^2$, $M^3$, $M^4$ und $M^5$ jeweils für Wasserstoff oder Lithium, Natrium, Kalium, Magnesium, Calcium, Ammonium, Methylammonium, Ethylammonium, Trimethylammonium, Triethylammonium, n-Butylammonium, n-Hexylammonium, Octylammonium, Ethanolammonium, Diethanolammonium, Triethanolammonium oder Morpholinium stehen.

Ganz besonders bevorzugt sind Verbindungen der Formel (I), in welcher $M^1$, $M^2$, $M^3$, $M^4$ und $M^5$ für Wasserstoff, Natrium oder Triethanolammonium stehen.

Die phosphorhaltigen Verbindungen der allgemeinen Formel (I) lassen sich in einfacher Weise aus leicht verfügbaren und preisgünstigen Rohstoffen herstellen. Dazu wird Acrolein zunächst mit mindestens einem Äquivalent eines Dialkylphosphits in Gegenwart eines basischen Katalysators zur Reaktion gebracht. Anschließend wird das erhaltene Reaktionsgemisch mit mindestens einem weiteren Äquivalent Dialkylphosphit in Gegenwart eines Radikalbildners oder unter UV-Bestrahlung umgesetzt. Zuletzt wird das Reaktionsgemisch nach Abdestillieren eventuell vorhandenen überschüssigen Dialkylphosphits mit Wasser, wäßriger Mineralsäure oder wäßriger Alkalilauge hydrolysiert.

Als Dialkylphosphit kommen in den ersten beiden Reaktionsschritten bevorzugt Dimethyl-, Diethyl-, Dipropyl-, und Dibutylphosphit zum Einsatz, besonders bevorzugt Dimethylphosphit. Die beiden ersten Reaktionsschritte werden bevorzugt unter einem Schutzgas wie Argon oder Stickstoff durchgeführt sowie ohne Einsatz eines inerten Lösemittels. Selbstverständlich können die beiden ersten Reaktionsschritte auch in einem Ether wie beispielsweise Diethylether oder in einem aromatischen Kohlenwasserstoff wie beispielsweise Toluol als Lösemittel durchgeführt werden. Vor dem dritten Reaktionsschritt, der Hydrolyse, müssen diese Lösemittel aber destillativ entfernt werden.

Im ersten Reaktionsschritt beträgt der Einsatz an Dialkylphosphit bevorzugt 1 bis 1,5 mol pro mol eingesetztem Acrolein. Als basische Katalysatoren werden bevorzugt die den Dialkylphosphiten entprechenden Natriumalkoholate eingesetzt, besonders bevorzugt Natriummethylat. Auch der Einsatz von Aminen oder von festem Kaliumfluorid als basische Katalysatoren ist möglich. Die Alkoholate werden bevorzugt in Mengen von 5 bis 100 mmol pro mol Acrolein eingesetzt, besonders bevorzugt 10 bis 30 mmol/mol. Die Amine und Kaliumfluorid werden bevorzugt in Mengen von 100 bis 1000 mmol pro mol Acrolein, besonders bevorzugt in Mengen von 200 bis 500 mmol pro Mol Acrolein eingesetzt. Kaliumfluorid muß nach der ersten Synthesestufe im Gegensatz zu den anderen Katalysatoren durch Filtration abgetrennt werden. Die Amine können im Produkt verbleiben. Die Temperatur während der ersten Reaktionsstufe beträgt bevorzugt 0 bis 80 °C, besonders bevorzugt 20 bis 40 °C.

Im zweiten Reaktionsschritt werden dem Reaktionsgemisch aus Reaktionsschritt eins bevorzugt 1 bis 4 mol Dialkylphosphit pro mol ursprünglich eingesetztem Acrolein zugegeben. Die zum Starten der Reaktion notwendigen Radikale können durch UV-Bestrahlung des Reaktionsgemischs erzeugt werden. Bevorzugt wird aber ein Radikalbildner als Katalysator zugegeben. Geeignete Katalysatoren sind organische Peroxide wie Di-tert.-Butylperoxid, tert.-Butylhydroperoxid, Benzoylperoxid oder tert.-Butyl-per-(2-ethyl)hexanoat oder andere Radikalbildner wie $\alpha,\alpha'$-Azodiisobutyronitril. Die Katalysatoren werden bevorzugt in Mengen von 0,1 bis 10 Mol-% bezogen auf ursprüngliches Acrolein bei Temperaturen von 50 bis 180 °C eingesetzt. Vorteilhaft ist auch die gleichzeitige Zugabe einer säurebindenden Substanz wie beispielsweise Natriummethylat. Ein eventuell vorhandener Überschuß an Dialkylphosphit kann nach Zugabe des Katalysators unter vermindertem Druck abdestilliert und rückgewonnen werden. Nach diesem zweiten Reaktionsschritt wird ein komplexes Phosphonsäureestergemisch erhalten, welches keine Verbindungen mit C=C-Doppelbindungen mehr enthält.

Im dritten Reaktionsschritt wird das komplexe Phosphonsäureestergemisch mit Wasser, wäßriger Mineralsäure oder wäßriger Alkalilauge bei Temperaturen von bevorzugt 90 bis 150 °C erhitzt und das entstandene Alkohol-Wasser-Gemisch gleichzeitig abdestilliert. Die Hydrolyse kann auch unter erhöhtem Druck ausgeführt werden. Man erhält dabei eine wäßrige Lösung von 1-Hydroxypropan-1,3-diphosphonsäure oder eine Lösung ihrer Alkalisalze.

Die Alkali-, Erdalkali-, Ammonium-, oder alkylsubstituierten Ammoniumsalze lassen sich durch vollständige oder teilweise Neutralisation der freien Säure mit den entsprechenden Metallhydroxiden oder -carbonaten bzw. mit den freien Aminen herstellen.

Während der Reaktionsschritte 1 und 2 wird ein Phosphonsäureestergemisch mit jeweils zunehmender Komplexität erhalten, welches die unmittelbar erkennbaren Vorläufer (II) und (III) der 1-Hydroxypropan-1,3-diphosphonsäure bzw. ihrer Derivate in abnehmender Konzentration enthält.

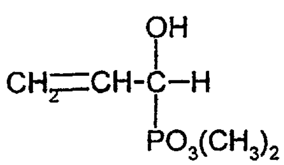 (II) 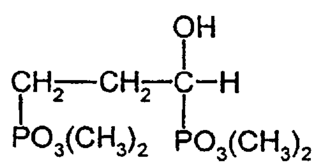 (III)

So enthält in Beispiel 1 das Reaktionsgemisch nach der ersten Reaktionsstufe noch 67% des Phosphors in Verbindung (II), nach der zweiten Reaktionsstufe nur noch 28,8 % des Phosphors in Verbindung (III). Überraschenderweise wird bei der Hydrolyse des komplexen Gemischs aus Stufe zwei ein Phosphonsäuregemisch enthalten, welches 71,7% des Phosphors in Form der 1-Hydroxypropan-1,3-diphosphonsäure (I) enthält. Es entsteht also aus einem unübersichtlichen Gemisch ohne zusätzliche Reinigungsstufe allein durch die Hydrolyse ein relativ einheitlicher Stoff. In diesem Rohprodukt vorhandene Verunreinigungen, hauptsächlich Phosphorige Säure, daneben verschiedene unbekannte Phosphonsäuren und Phosphorsäure, können bei der erfindungsgemäßen Verwendung der 1-Hydroxypropan-1,1-diphosphonsäure im Produkt verbleiben.

Vorteilhaft an dem erfindungsgemäßen Herstellverfahren ist, daß sich bereits nach der zweiten Reaktionsstufe praktisch keine C=C-Doppelbindungen mehr im Reaktionsgemisch nachweisen lassen. Sowohl das Estergemisch aus Stufe zwei, als auch die l-Hydroxypropan-1,3-diphosphonsäure aus Stufe drei sind frei von ungesättigten Verbindungen.

l-Hydroxypropan-1,3-diphosphonsäure und ihre Salze können zur Verhinderung von Metallkorrosion und Kesselsteinablagerung in wäßrigen Systemen angewandt werden. Dazu wird die l-Hydroxypropan-1,3-diphosphonsäure oder ihre Salze in roher oder durch Kristallisation gereinigter Form dem wäßrigen System in einer Konzentration von 0,1 bis 50000 ppm zugegeben. Vorzugsweise beträgt die Konzentration an 1-Hydroxypropan-1,3-diphosphonsäure in dem wäßrigen System 1 bis 500 ppm, besonders bevorzugt 1 bis 100 ppm. Daneben können die Mittel auch Phosphorige Säure oder ein wasserlösliches Salz der Phosphorigen Säure enthalten, vorzugsweise in einer Konzentration von 0,1 bis 20 000 ppm.

Wäßrige Systeme, die erfindungsgemäß gleichzeitig gegen Korrosion und Kesselsteinablagerung behandelt werden können, sind Kühlwassersysteme, dampferzeugende Systeme, Meerwasserverdampfer, Gaswaschsysteme und Heizsysteme.

1-Hydroxypropan-1,3-diphosphonsäure und ihre Salze können allein oder auch zusammen mit anderen für die Behandlung von wäßrigen Systemen geeigneten Verbindungen verwendet werden. So kann das wäßrige System neben 1-Hydroxypropan-1,3-diphosphonsäure in roher oder durch Kristallisation gereinigter Form auch Dispergiermittel wie wasserlösliche Polyacrylate, Polymethacrylate, Polyaspartate oder Copolymere von Acrylamid mit Acrylsäure; Sequestiermittel wie Nitrilotriessigsäure oder Ethylendiamintetraessigsäure; Antischaummittel wie Polydimethylsiloxane oder Distearylsebacinsäureamid; Biozide wie Amine, Triazine, Chlorphenole oder chlorabgebende Substanzen; sauerstoffbindende Substanzen wie Hydrazin oder Alkalimetallsulfite enthalten. Auch weitere Korrosionsinhibitoren wie wasserlösliche Zinksalze; Phosphate, Polyphosphate; Phosphonsäuren und deren Salze wie Nitrilotrismethylenphosphonsäure; Phosphonocarbonsäuren wie Phosphonobernsteinsäure, Phosphonopropionsäure oder Hydroxyphosphonoessigsäure; Chromate wie Natriumchromat; Nitrite wie Natriumnitrit; Benztriazole, Bis-Benztriazole oder Kupfer desaktivierende Benztriazol- oder Tolutriazolderivate; N-Acylsarcosine; N-Acyliminodiessigsäuren; Ethanolamine oder Fettsäureamine; Phosphonatgruppen enthaltende Oligomere der Maleinsäure mit Phosphoriger Säure wie in EP 491 391 oder Phosphonatgruppen enthaltende Cooligomere von Acrylsäure mit Maleinsäure gemäß DE-OS 3 044 214 können in dem wäßrigen System enthalten sein. Ebenso können auch weitere Kesselsteininhibitoren wie 2-Phosphonobutan-1,2,4-tricarbonsäure, 1-Hydroxyethan-1,1-diphosphonsäure oder Diethylentriaminpenta(methylenphopshonsäure) dem wäßrigen System zugesetzt werden.

Weiterhin können 1-Hydroxypropan-1,3-diphosphonsäure und ihre Salze als Flammschutzmittel für Kunststoffe wie Polyurethane oder Epoxidharze verwendet werden. Bevorzugt werden die Calcium-, Magnesium-, Aluminium- oder Trialkylammoniumsalze der 1-Hydroxypropan-1,3-diphosphonsäure eingesetzt. Dazu werden sie in entwässerter Form den Kunststoffvorprodukten zugefügt.

Auch das nach der zweiten Reaktionsstufe erhaltene Phosphonsäureestergemisch, welches ein Zwischenprodukt der 1-Hydroxypropan-1,3-diphosphonsäure-Synthese bzw. ihrer Derivate darstellt und 10 bis 40 % des Phosphors in Form eines 1-Hydroxypropan-1,3-diphosphonsäure-Tetraalkylesters enthält, läßt sich als Flammschutzmittel für Kunststoffe verwenden. Dieses Phosphonsäureestergemisch aus der zweiten Reaktionsstufe von Acrolein mit einem Dialkylphosphit läßt sich ohne Vorbehandlung in die Kunststoffvorprodukte wie beispielsweise die Polyole bei der Polyurethanherstellung einarbeiten.

Die Erfindung soll anhand der nachfolgenden Beispiele erläutert werden.

**Beispiel 1**

330 g (3 mol) Dimethylphosphit werden in einem Mehrhalskolben unter Stickstoff vorgelegt. Aus zwei getrennten Vorlagen werden innerhalb von einer Stunde unter Rühren gleichzeitig 168 g (2,85 mol) Acrolein (ca. 95%ig, stabilisiert mit 0,2% Hydrochinon) und 13,2 g (0,06 mol) methanolische Natriummethylatlösung (25%ig) zugetropft. Das Reaktionsgemisch erwärmt sich rasch und wird durch Kühlung bei 40 °C gehalten. 30 min nach Beendigung der Zugabe werden noch einmal 1,5 g Natriummethylatlösung zugegeben. Das Reaktionsgemisch wird weitere 2,5 Stunden bei 30 bis 40 °C gerührt. Laut $^{31}$P-NMR-Analyse liegen 67,1 % des Phosphors im Monophosphonat (II) vor, 9,8 % im Diphosphonat (III) und 1,5 % in Dimethyl- und Monomethylphosphit. Die chemische Verschiebung δ (gemessen in $CDCl_3$ und gegen 85%ige $H_3PO_4$ als externen Standard) für Verbindung (II) ist 24,3 ppm (1-P), für Verbindung (III) 26,7 ppm (1-P) und 35,1 ppm (3-P).

In einem zweiten Reaktionskolben werden 990 g (9 mol) Dimethylphosphit und 3,5 g (0,065 mol) festes Natriummethylat vorgelegt Die Apparatur wird 2mal evakuiert und jedesmal mit Stickstoff gespült. Anschließend wird das Dimethylphosphit auf 110 °C erwärmt und aus zwei getrennten Vorlagen gleichzeitig mit dem Phosphonatgemisch aus der vorhergehenden Synthesestufe und einer Lösung von 40 g (0,13 mol) tert.-Butyl-per-(2-ethyl)hexanoat (70 %ig) in 165 g (1,5 mol) Dimethylphosphit versetzt. Die Reaktionstemperatur wird während der 80minütigen Zugabe und einer 30minütigen Nachreaktionszeit bei 110 bis 120 °C gehalten. Anschließend wird überschüssiges Dimethylphosphit abdestilliert, wobei die Hauptmenge (852,2 g) bei einer Sumpftemperatur bis 75 °C und einem Druck von 20 mbar, die Restmenge bis zu einer Sumpftemperatur von 130 °C bei einem Druck von 1 mbar abdestilliert. Die gesamte Destillatmasse beträgt 895 g und ist nur wenig höher als die theoretisch erwartete Destillatmasse von 865 g (825 g (7,5 mol) Dimethylphosphit + 40 g Katalysator). Laut $^{31}$P-NMR-Analyse liegen im Sumpf 28,8 % des Phosphors im Diphosphonat (III) vor. Die chemischen Verschiebungen δ (gemessen in $CDCl_3$ und gegen 85%ige $H_3PO_4$ als externen Standard) für die beiden Phosphoratome in Verbindung (III) sind 26,3 ppm (1-P) und 34,5 ppm (3-P). Beide Phosphorsignale zeigen eine P,P-Fernkopplung mit einer Kopplungskonstante $^4J_{PP}$ = 7,7 Hz. Monophosphonat (II) ist nicht nachweisbar. Das $^1$H-NMR-Spektrum zeigt kein Signal für olefinische Protonen, was bedeutet, daß die C=C-Doppelbindungen des Acroleins vollständig abgesättigt sind.

Zur Hydrolyse werden 730 g des Sumpfprodukts mit 300 g Wasser vermischt und in einer Destillationsapparatur auf 120 °C erwärmt. Über einen Zeitraum von 12 h werden bei 115 - 120 °C ständig 330 g Wasser pro Stunde in den Sumpf zudosiert. Gleichzeitig destilliert ein Methanol-Wasser-Gemisch ab.

Eine $^{31}P$-NMR-Analyse des hydrolysierten Sumpfes zeigt, daß 71,7 % des Phosphors in der 1-Hydroxypropan-1,3-diphosphonsäure (I) vorliegen.

Die chemischen Verschiebungen δ für die beiden Phosphoratome von Verbindung (I) (gemessen in $H_2O$ und gegen 85%ige $H_3PO_4$ als externen Standard) betragen 22,6 ppm (1-P) und 30,6 ppm (3-P). Beide Phosphorsignale zeigen eine P,P-Fernkopplung mit einer Kopplungskonstante $^4J_{PP}$ = 7,3 Hz. Ein $^{13}C$-NMR-Spektrum (gemessen in $H_2O$ mit Trimethylsilyltetradeuteropropionsäure-Natriumsalz (TSP) als internem Standard, eingestellt auf δ = 1,7 ppm) zeigt folgende chemische Verschiebungen δ (bezogen auf Tetramethylsilan (TMS)) und Kopplungskonstanten J: 1-C: δ = 71,76 ppm ($^1J_{CP}$ = 160,9 Hz, $^3J_{CP}$ = 17,0 Hz); 2-C: δ = 28,88 ppm (t, $J_1$ ungefähr gleich $J_2$ = 3,8 Hz); 3-C: 27,23 ppm ($^1J_{CP}$ = 135,6 Hz, $^3J_{CP}$ = 13,9 Hz).

Neben der 1-Hydroxypropan-1,3-diphosphonsäure enthält die Lösung noch andere Phosphonate unbekannter Struktur, welche zusätzlich 16,9% des Phosphors binden, weiterhin $H_3PO_3$ (11,2% des Phosphors) und $H_3PO_4$ (0,9%). Insgesamt sind 88,6 % des Phosphors in Phosphonaten gebunden. Aus diesem Gesamtphosphonatgehalt, dem Phosphorgehalt der Lösung (15,5 Massen-%) und der Molmasse von 220,06 g/mol wird ein Phosphonsäuregehalt von 48,8 Massen-% berechnet. Diese Konzentration wird zur Berechnung der Einwaage in den folgenden Anwendungstests verwendet.

**<u>Beispiel 2</u>**

Zur Prüfung der korrosionsinhibierenden Wirkung wird ein synthetisches Leitungswasser hergestellt, welches 0,005 mol/l $CaCl_2$, 0,001 mol/l $MgSO_4$, 0,0031 mol/l $Na_2SO_4$ und 0,0064 mol/l $NaHCO_3$, entsprechend einer berechneten Gesamthärte von 33,6 °dH, enthält. Zu diesem Wasser wird eine kleine Menge des mit Natronlauge vorneutralisierten Inhibitors gegeben, so daß dessen Anfangskonzentration in der Testlösung, berechnet als freie Inhibitorsäure, 7,5 ppm beträgt. Als Inhibitoren werden 1-Hydroxypropan-1,3-diphosphonsäure aus Beispiel 1, 1-Hydroxyethan-1,1-diphosphonsäure (HEDP) und Hydroxyphosphonoessigsäure (HEP) eingesetzt. Die Lösung wird in einen 12 Liter fassenden Behälter gefüllt, in dem 4 Stahlrohrringe aus St 37 an einem Rührer mit der Geschwindigkeit von 0,6 m/s bewegt werden. Während der gesamten Versuchszeit dosiert man in den Behälter 0,4 1/h frische Lösung zu, die neben den obengenannten Salzen 5 ppm des entsprechenden Inhibitors enthält, und läßt die gleiche Menge über einen Überlauf abfließen. Nach 24 h wird der pH-Wert in der Behälterflüssigkeit gemessen. Nach 72 h werden die Ringe entnommen, gebeizt und visuell begutachtet. Der Massenverlust der Ringe wird ermittelt.

Bei 1-Hydroxypropan-1,3-diphosphonsäure aus Beispiel 1 sowie bei HPE läßt sich nur minimaler Lochfraß an den Stahlringen feststellen. Die Abtragsraten betragen für 1-Hydroxypropan-1,3-diphosphonsäure 0,137 mm/a (bei pH 8,43) und für HPE 0,136 mm/a (bei pH 8,45). In dem Versuch mit HEDP weisen die Stahlringe dagegen deutlichen Lochfraß auf. Die Korrosionsgeschwindigkeit beträgt hier 0,323 mm/a bei pH 8,50.

**<u>Beispiel 3</u>**

Zur Prüfung der steininhibierenden Wirkung wird ein synthetisches Leitungswasser hergestellt, welches 0,005 mol/l $CaCl_2$, 0,001 mol/l $MgSO_4$, 0,0031 mol/l $Na_2SO_4$ und 0,0064 mol/l $NaHCO_3$ enthält. Die Gesamthärte dieses Wassers wird durch Titration mit EDTA zu 32,8° dH bestimmt. Zu diesem Wasser wird eine kleine Menge des mit Natronlauge vorneutralisierten Inhibitors gegeben, so daß dessen Konzentration in der Testlösung, berechnet als freie Inhibitorsäure, 5 ppm beträgt. Die Lösung wird durch Zugabe von molarer Natronlauge auf einen pH von 9,0 eingestellt und in einer geschlossenen Glasflasche mit eingestelltem, frisch entfettetem Glasstab 24 h bei 80 °C in einem Trokkenschrank gelagert. Nach der Lagerung wird die Lösung auf abgeschiedene Kristalle begutachtet und über ein 0,45 um Membranfilter filtriert. Im Filtrat werden der pH-Wert gemessen und die Rest-Gesamthärte durch Titration bestimmt. Daraus wird die prozentuale Resthärte (RH %) nach folgender Formel berechnet:

$$RH[\%]= \frac{a - b}{c - b} \times 100$$

a = Resthärte im Filtrat der Probe mit Inhibitorzusatz

b = Resthärte im Filtrat einer Vergleichsprobe ohne Inhibitorzusatz

c = Anfangshärte

Je höher die Werte RH [%] im Filtrat, desto wirksamer wird die $CaCO_3$-Ausfällung inhibiert.

Bei 1-Hydroxypropan-1,3-diphosphonsäure, hergestellt gemäß Beispiel 1, ist die Lösung nach 24stündiger Lagerung klar. Die Härtebestimmung ergibt 100% des Ausgangswertes. Der pH-Wert ist von 9,04 zu Beginn der Lagerung auf 8,89 nach der Lagerung abgesunken.

Beim HPE-Versuch ist Kristallbildung an den Glaswänden der Flasche zu beobachten. Die prozentuale Resthärte RH [%] beträgt 63,7 %. Der pH ist deutlich von 9,09 auf 8,59 abgesunken.

Die HEDP-Lösung scheidet nach 24 h an der Glaswand Kristalle sowie am Flaschenboden einen schlammartigen Niederschlag ab. Die prozentuale Resthärte RH [%] beträgt 94,1 %. Der pH ist von 9,07 auf 8,95 abgesunken.

Wie aus diesem Beispiel hervorgeht, inhibiert 1-Hydroxypropan-1,3-diphosphonsäure als einzige der getesteten Phosphonsäuren die Abscheidung von $CaCO_3$ vollständig. HEDP schneidet beim Steininhibiertest etwas schlechter, HPE dagegen deutlich schlechter ab.

Ein Vergleich von Beispiel 2 mit Beispiel 3 zeigt, daß 1-Hydroxypropan-1,3-diphosphonsäure als einzige der drei getesteten Phosphonsäuren gute Korrosions- und Steininhibierung in sich vereinigt.

**Patentansprüche**

1. Phosphorhaltige Verbindungen der Formel (I)

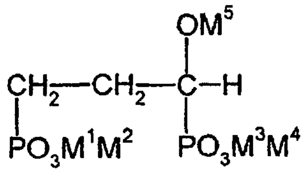

(I),

**dadurch gekennzeichnet, daß** $M^1$, $M^2$, $M^3$, $M^4$ und $M^5$ unabhängig voneinander für einen Rest der Reihe Wasserstoff, Alkalimetall, ein Äquivalent eines Erdalkalimetalls, Ammonium, alkyl- oder hydroxyalkylsubstituiertes Ammonium stehen.

2. Phosphorhaltige Verbindung der Formel (I), **dadurch gekennzeichnet, daß** $M^1$, $M^2$, $M^3$, $M^4$ und $M^5$ jeweils für Wasserstoff stehen.

3. Verfahren zur Herstellung von phosphorhaltigen Verbindungen der Formel (I)

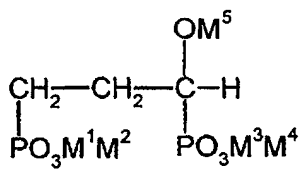

(I),

in welcher $M^1$, $M^2$, $M^3$, $M^4$ und $M^5$ die in Anspruch 1 genannten Bedeutungen haben, **dadurch gekennzeichnet, daß** in einer ersten Reaktionsstufe Acrolein mit mindestens einem Äquivalent eines Dialkylphosphits in Gegenwart eines basischen Katalysators zur Reaktion gebracht wird, in einer zweiten Stufe das erhaltene Reaktionsgemisch aus Stufe eins mit mindestens einem weiteren Äquivalent Dialkylphosphit in Gegenwart eines Radikalbildners oder unter UV-Bestrahlung umgesetzt wird, in einer dritten Stufe das Reaktionsgemisch aus Stufe zwei mit Wasser, wäßriger Mineralsäure oder wäßriger Alkalilauge hydrolysiert wird und die im Falle der Hydrolyse mit Wasser oder Mineralsäure entstehende 1-Hydroxypropan-1,3-diphosphonsäure mit einem Alkali- oder Erdalkalihydroxid, Ammoniak oder einem Amin ganz oder teilweise neutralisiert wird.

4. Verfahren gemäß Anspruch 3, **dadurch gekennzeichnet, daß** als Dialkylphosphit in den ersten beiden Reaktionsstufen Dimethyl-, Diethyl-, Dipropyl-, oder Dibutylphosphit zum Einsatz kommt.

5. Verfahren gemäß Anspruch 3, **dadurch gekennzeichnet, daß** pro mol Acrolein im ersten Reaktionsschritt 1 bis 1,5 mol Dialkylphosphit, im zweiten Reaktionsschritt 1 bis 4 mol Dialkylphosphit eingesetzt werden.

6. Verfahren gemäß Anspruch 3, **dadurch gekennzeichnet, daß** überschüssiges Dialkylphosphit nach der zweiten

und vor der dritten Reaktionsstufe durch Destillation abgetrennt wird.

7. Verfahren gemäß Anspruch 3, **dadurch gekennzeichnet, daß** als basischer Katalysator das den Dialkylphosphiten entprechende Alkoholat, festes Kaliumfluorid oder ein Amin eingesetzt wird.

8. Verfahren gemäß Anspruch 7, **dadurch gekennzeichnet, daß** als basischer Katalysator Natriummethylat eingesetzt wird.

9. Verfahren gemäß Anspruch 7, **dadurch gekennzeichnet, daß** die eingesetzte Menge an Alkoholat 5 bis 100 mmol pro mol Acrolein beträgt.

10. Verfahren gemäß Anspruch 3, **dadurch gekennzeichnet, daß** in der zweiten Reaktionsstufe als Radikalbildner ein organisches Peroxid oder $\alpha,\alpha'$-Azodiisobutyronitril eingesetzt wird.

11. Verfahren gemäß Anspruch 3, **dadurch gekennzeichnet, daß** in der zweiten Reaktionsstufe neben dem Radikalbildner zusätzlich eine basische Substanz eingesetzt wird.

12. Mittel zur Inhibierung der Metallkorrosion und der Kesselsteinablagerung, **dadurch gekennzeichnet, daß** ein wirksamer Anteil einer phosphorhaltigen Verbindung gemäß Anspruch 1 in einer Konzentration von 0,1 bis 50 000 ppm enthalten ist.

13. Mittel gemäß Anspruch 12, **dadurch gekennzeichnet, daß** neben der wirksamen Menge phosphorhaltiger Verbindung der Formel (I) gemäß Anspruch 1 Phosphorige Säure oder ein wasserlösliches Salz der Phosphorigen Säure in einer Konzentration von 0,1 bis 20 000 ppm enthalten ist.

14. Verwendung phosphorhaltiger Verbindungen der Formel (I) gemäß Anspruch 1 zur Inhibierung der Metallkorrosion und der Kesselsteinablagerung in Kühlwassersystemen, dampferzeugenden Systemen, Meerwasserverdampfern, Gaswaschsystemen, Kühl- und Heizsystemen.

15. Verwendung der phosphorhaltigen Verbindungen gemäß Anspruch 1 als Flammschutzmittel in Kunststoffen.

16. Phosphonsäureestergemisch erhältlich durch Umsetzung von Acrolein mit mindestens einem Äquivalent eines Dialkylphosphits in Gegenwart eines basischen Katalysators und nachfolgende Umsetzung mit mindestens einem weiteren Äquivalent Dialkylphosphit in Gegenwart eines Radikalbildners oder unter UV-Bestrahlung und nachfolgendes Abdestillieren überschüssigen Dialkylphosphits.

17. Phosphonsäureestergemisch erhältlich nach Anspruch 16, **dadurch gekennzeichnet, daß** 10 bis 40% des Phosphors in Form eines l-Hydroxypropan-1,3-diphosphonsäure-Tetraalkylesters enthalten sind.

18. Verwendung des Phosphonsäureestergemischs erhältlich nach Anspruch 16 als Flammschutzmittel in Kunststoffen.

## Claims

1. Phosphorus-containing compounds of the formula (I)

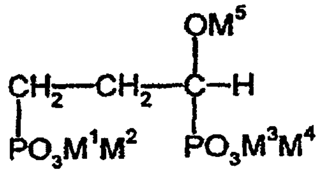

(I),

**characterized in that** $M^1$, $M^2$, $M^3$, $M^4$ and $M^5$ are each independently selected from the group consisting of hydrogen, an alkali metal, one equivalent of an alkaline earth metal, ammonium, alkyl-substituted ammonium and hydroxyalkyl-substituted ammonium.

2. Phosphorus-containing compound of the formula (I), **characterized in that** $M^1$, $M^2$, $M^3$, $M^4$ and $M^5$ are each hydrogen.

3. Process for preparing phosphorus-containing compounds of the formula (I)

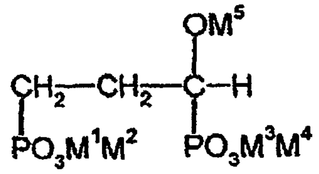

(I),

where $M^1$, $M^2$, $M^3$, $M^4$ and $M^5$ are each as defined in Claim 1, **characterized in that** it comprises a first reaction step where acrolein is reacted with at least one equivalent of a dialkyl phosphite in the presence of a basic catalyst, a second step where the resulting reaction mixture from step one is reacted with at least one further equivalent of dialkyl phosphite in the presence of a radical former or under UV irradiation and a third step where the reaction mixture from step two is hydrolysed with water, aqueous mineral acid or aqueous alkali metal hydroxide solution and the 1-hydroxypropane-1,3-diphosphonic acid formed in the case of the hydrolysis with water or mineral acid is wholly or partly neutralized with an alkali or alkaline earth metal hydroxide, ammonia or an amine.

4. Process according to Claim 3, **characterized in that** the dialkyl phosphite used in the first two reaction steps is dimethyl phosphite, diethyl phosphite, dipropyl phosphite or dibutyl phosphite.

5. Process according to Claim 3, **characterized in that** the amount of dialkyl phosphite used per mole of acrolein is from 1 to 1.5 mol in the first reaction step and from 1 to 4 mol in the second reaction step.

6. Process according to Claim 3, **characterized in that** excess dialkyl phosphite is removed by distillation after the second reaction step and before the third reaction step.

7. Process according to Claim 3, **characterized in that** the basic catalyst used is the alkoxide corresponding to the dialkyl phosphites, solid potassium fluoride or an amine.

8. Process according to Claim 7, **characterized in that** the basic catalyst used is sodium methoxide.

9. Process according to Claim 7, **characterized in that** the amount of alkoxide used is from 5 to 100 mmol per mole of acrolein.

10. Process according to Claim 3, **characterized in that** the radical former used in the second reaction step is an organic peroxide or $\alpha,\alpha'$-azodiisobutyronitrile.

11. Process according to Claim 3, **characterized in that** a basic substance is additionally used in the second reaction step as well as the radical former.

12. Composition for inhibiting metal corrosion and scale formation, **characterized in that** an effective fraction of a phosphorus-containing compound according to Claim 1 is included in a concentration of from 0.1 to 50 000 ppm.

13. Composition according to Claim 12, **characterized in that** phosphorous acid or a water-soluble salt of phosphorous acid is included in a concentration of from 0.1 to 20 000 ppm as well as the effective amount of phosphorus-containing compound of the formula (I) according to Claim 1.

14. Use of phosphorus-containing compounds of the formula (I) according to Claim 1 for inhibiting metal corrosion and scale formation in cooling water systems, steam-generating systems, seawater evaporators, gas-scrubbing systems, cooling systems and heating systems.

15. Use of the phosphorus-containing compounds according to Claim 1 as a flame retardant in plastics.

**16.** Phosphonic ester mixture obtainable by reacting acrolein with at least one equivalent of a dialkyl phosphite in the presence of a basic catalyst and subsequent reaction with at least one further equivalent of dialkyl phosphite in the presence of a radical former or under UV irradiation and subsequent distillative removal of excess dialkyl phosphite.

**17.** Phosphonic ester mixture obtainable according to Claim 16, **characterized in that** from 10 to 40% of the phosphorus is included in the form of a tetraalkyl 1-hydroxypropane-1,3-diphosphonate.

**18.** Use of the phosphonic ester mixture obtainable according to Claim 16 as a flame retardant in plastics.

**Revendications**

**1.** Dérivés phosphorés de formule (I)

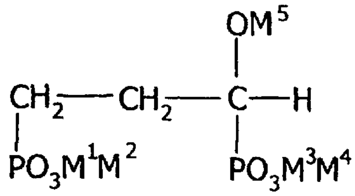

(I),

**caractérisés en ce que** $M^1$, $M^2$, $M^3$, $M^4$ et $M^5$ représentent chacun, indépendamment les uns des autres, l'hydrogène, un métal alcalin, un équivalent d'un métal alcalino-terreux, un groupe ammonium à substituants alkyle ou hydroxyalkyle.

**2.** Dérivé phosphoré de formule (I) **caractérisé en ce que** $M^1$, $M^2$, $M^3$, $M^4$ et $M^5$ représentent tous l'hydrogène.

**3.** Procédé de préparation des dérivés phosphorés de formule (I)

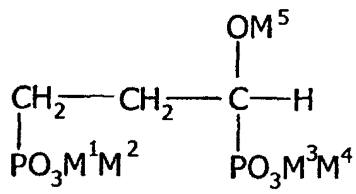

(I),

dans laquelle $M^1$, $M^2$, $M^3$, $M^4$ et $M^5$ ont les significations indiquées dans la revendication 1, **caractérisé en ce que**, dans un premier stade de réaction, on fait réagir l'acroléine avec au moins un équivalent d'un phosphite de dialkyle en présence d'un catalyseur basique, dans un deuxième stade, on fait réagir le mélange de réaction du premier stade avec au moins un autre équivalent de phosphite de dialkyle en présence d'un inducteur radicalaire ou sous irradiation par UV et dans un troisième stade, on soumet le mélange de réaction du deuxième stade à hydrolyse par de l'eau, un acide minéral aqueux ou une lessive alcaline puis on neutralise en totalité ou en partie l'acide 1-hydroxypropane-1,3-diphosphonique obtenu dans le cas d'une hydrolyse par de l'eau ou un acide minéral, à l'aide d'un hydroxyde alcalin ou alcalino-terreux, d'ammoniac ou d'une amine.

**4.** Procédé selon la revendication 3, **caractérisé en ce que** le phosphite de dialkyle utilisé dans les deux premiers stades de réaction est le phosphite de diméthyle, de diéthyle, de dipropyle ou de dibutyle.

**5.** Procédé selon la revendication 3, **caractérisé en ce que**, pour 1 mol d'acroléine, on met en oeuvre au premier stade de réaction 1 à 1,5 mol de phosphite de dialkyle et au deuxième stade de réaction 1 à 4 mol de phosphite de dialkyle.

**6.** Procédé selon la revendication 3, **caractérisé en ce que** l'on sépare par distillation l'excès de phosphite de dialkyle

après le deuxième stade de réaction et avant le troisième.

7. Procédé selon la revendication 3, **caractérisé en ce que** l'on utilise en tant que catalyseur basique l'alcoolat correspondant au phosphite de dialkyle, du fluorure de potassium solide ou une amine.

8. Procédé selon la revendication 7, **caractérisé en ce que** l'on utilise en tant que catalyseur basique le méthylate de sodium.

9. Procédé selon la revendication 7, **caractérisé en ce que** l'alcoolate mis en oeuvre représente de 5 à 100 mmol/mol d'acroléine.

10. Procédé selon la revendication 3, **caractérisé en ce que**, au deuxième stade de réaction, on utilise en tant qu'inducteur radicalaire un peroxyde organique ou l'α,α-azodiisobutyronitrile.

11. Procédé selon la revendication 3, **caractérisé en ce que**, au deuxième stade de réaction, avec l'inducteur radicalaire, on utilise en outre une substance basique.

12. Produit pour l'inhibition de la corrosion des métaux et des formations de tartre, **caractérisé en ce qu'**il contient une fraction efficace d'un dérivé phosphoré selon la revendication 1 à une concentration de 0,1 à 50000 ppm.

13. Produit selon la revendication 12, **caractérisé en ce que**, avec la fraction efficace du dérivé phosphoré de formule (I) selon la revendication 1, il contient de l'acide phosphoreux ou un sel hydrosoluble de l'acide phosphoreux à une concentration de 0,1 à 20000 ppm.

14. Utilisation de dérivés phosphorés de formule (I) selon la revendication 1 pour l'inhibition de la corrosion des métaux et des formations de tartre dans les systèmes d'eau de réfrigération, les systèmes générateurs de vapeur, les vaporiseurs d'eau de mer, les systèmes de lavage de gaz, les systèmes de refroidissement et de chauffage.

15. Utilisation des dérivés phosphorés selon la revendication 1 en tant qu'agents ignifugeants dans des résines synthétiques.

16. Mélange d'esters phosphoniques obtenu par réaction de l'acroléine avec au moins un équivalent d'un phosphite de dialkyle en présence d'un catalyseur basique, suivie de la réaction avec au moins un autre équivalent de phosphite de dialkyle en présence d'un inducteur radicalaire ou sous irradiation par UV et finalement d'une distillation de l'excès de phosphite de dialkyle.

17. Mélange d'esters phosphoniques obtenu selon la revendication 16, **caractérisé en ce qu'**il contient 10 à 40 % du phosphore à l'état d'un 1-hydroxypropane-1,3-diphosphonate de tétraalkyle.

18. Utilisation du mélange d'esters phosphoniques obtenu selon la revendication 16 en tant qu'agent ignifugeant dans des résines synthétiques.